# EUROPÄISCHE PATENTSCHRIFT

(11) **EP 1 144 844 B1**
(45) Veröffentlichungstag und Bekanntmachung des Hinweises auf die Patenterteilung: **14.02.2007**
(21) Anmeldenummer: 00988611.0
(22) Anmeldetag: 11.11.2000
(51) Int. Cl.: F02M 47/02, F02M 59/46, F02M 45/04

(54) **BRENNSTOFFEINSPRITZVENTIL**
FUEL INJECTION VALVE
SOUPAPE D'INJECTION DE CARBURANT

(30) Priorität: 13.11.1999 DE 19954802
(43) Veröffentlichungstag der Anmeldung: 17.10.2001
(73) Patentinhaber: ROBERT BOSCH GMBH, 70442 Stuttgart (DE)
(72) Erfinder: RUEHLE, Wolfgang, 71254 Ditzingen (DE); STIER, Hubert, 71679 Asperg (DE); BOEE, Matthias, 71640 Ludwigsburg (DE); HOHL, Guenther, 70569 Stuttgart (DE); KEIM, Norbert, 74369 Loechgau (DE)
(86) Internationale Anmeldenummer: PCT/DE2000/004018
(87) Internationale Veröffentlichungsnummer: WO 2001/036807

(56) Entgegenhaltungen:
- DE-A- 3 742 241
- DE-A- 19 742 320
- DE-A- 19 743 299
- DE-A- 19 807 903
- DE-C- 19 519 192
- US-A- 5 875 764

## Beschreibung

### Stand der Technik

Die Erfindung geht aus von einem Brennstoffeinspritzventil nach der Gattung des unabhängigen Anspruchs.

Aus der DE 195 19 192 C1 ist ein Brennstoffeinspritzventil nach der Gattung des unabhängigen Anspruchs bekannt. Das aus dieser Druckschrift bekannte Brennstoffeinspritzventil weist einen piezoelektrischen Aktor, eine von dem Aktor mittels einer hydraulischen Hubübersetzung betätigbare Ventilnadel und einen von der Ventilnadel betätigbaren Ventilschließkörper auf, der mit einer Ventilsitzfläche zu einem Dichtsitz zusammenwirkt. Die Hubübersetzung übernimmt dabei zugleich die Aufgabe einer Temperaturkompensation, wozu in der Hubübersetzung ringförmige Spalte vorgesehen sind, die ein Ein- und Ausfließen von Brennstoff in einen Hubübersetzungsraum zur Kompensation einer temperaturbedingten Längenänderung von Bauteilen des Brennstoffeinspritzventils ermöglichen.

Das aus der DE 195 19 192 C1 bekannte Brennstoffeinstoffeinspritzventil hat den Nachteil, daß der Ein- und Austritt von Brennstoff in den Hubübersetzungsraum über die ringförmigen Spalte nur mit einem geringen Brennstofffluß erfolgt, so daß ein vollständiges Auffüllen des Hubübersetzungsraums einen Zeitraum beansprucht, der deutlich länger als ein Einspritzzyklus ist. Das bekannte Brennstoffeinspritzventil eignet sich daher nicht für flüchtige Brennstoffe, wie z.B. Benzin. Bei Verwendung des Brennstoffs Benzin verflüchtigt sich zum Teil das Benzin bei einer längeren Standzeit des Brennstoffeinspritzventils insbesondere bei höheren Umgebungstemperaturen aus dem Hubübersetzungsraum, so daß bei einer Betätigung des Aktors keine dynamische Kraftübertragung auf die Ventilnadel möglich ist und somit das Brennstoffeinspritzventil nicht schnell genug betätigt werden kann.

Aus der DE 37 42 241 C2 ist ein Brennstoffeinspritzventil mit einer hydraulischen Hubübersetzungsvorrichtung bekannt, bei der als Hydraulikmedium Hydrauliköl eingesetzt wird. Der Temperaturausgleich erfolgt dabei über ein in einer Ventilnadel angeordnetes Rückschlagventil und über zwischen der Ventilnadel und einem Zylinder bzw. zwischen dem Zylinder und einer Hülse vorgesehene Ringspalte. Bei einer Betätigung des Brennstoffeinspritzventils verdrängt der Zylinder einen Teil des Hydrauliköls aus dem Hubübersetzungsraum, wodurch die Ventilnadel entgegen der Verschiebungsrichtung des Zylinders betätigt wird.

### Vorteile der Erfindung

Das erfindungsgemäße Brennstoffeinspritzventil mit den kennzeichnenden Merkmalen des unabhängigen Anspruchs hat demgegenüber den Vorteil, daß durch eine einfache konstruktive Maßnahme ein Temperaturausgleichsraum gebildet ist, wobei der Druck des Brennstoffs ausgenützt wird, um den Temperaturausgleichsraum über ein Richtungsventil in kurzer Zeit vollständig mit Brennstoff zu füllen.

Durch die in den abhängigen Ansprüchen aufgeführten Maßnahmen sind vorteilhafte Weiterbildungen des im unabhängigen Anspruch angegebenen Brennstoffeinspritzventils möglich.

Vorteilhaft ist es, daß das Richtungsventil mit einem Innenraum der Nadelmitnehmerhülse verbunden ist, wobei es besonders vorteilhaft ist, daß die Nadelmitnehmerhülse eine seitliche Aussparung aufweist, die Teil einer den Brennstoffeinlaß über das Richtungsventil mit dem Temperaturausgleichsraum verbindenden Brennstoffleitung ist. Dadurch kann der Aufbau der Temperaturausgleichsvorrichtung kompakt gestaltet werden.

In vorteilhafter Weise ist in einem Innenraum der Nadelmitnehmerhülse eine Schließfeder vorgesehen, die über den Ventilnadelbund der Ventilnadel auf den Druck des Brennstoffs in dem Temperaturausgleichsraum einwirkt. Dadurch kann ein in dem Innenraum der Nadelmitnehmerhülse vorhandener Platz zum Unterbringen der Schließfeder genutzt werden, wodurch sich ein kompakterer Aufbau des Brennstoffeinspritzventils ergibt.

Vorteilhaft ist es, daß die Ventilnadel eine Aussparung aufweist und daß zur Bildung des Richtungsventils in der Aussparung eine Kugel angeordnet ist, die mit einer konzentrischen, insbesondere kegelförmigen Dichtfläche der Aussparung zu einem Dichtsitz zusammenwirkt. Durch die Integration des Richtungsventils in die Ventilnadel lassen sich Bauteile einsparen, und durch die einfache Ausführung läßt sich der Fertigungsaufwand verringern.

In vorteilhafter Weise ist zum Einstellen einer maximalen Öffnungsbewegung der Kugel des Richtungsventils ein mit der Ventilnadel verbundener Einstellstift in der Aussparung vorgesehen. Durch Einstellen der maximalen Öffnungsbewegung läßt sich insbesondere das Ansprechverhalten des Richtungsventils vorgeben.

Vorteilhaft ist es, daß zwischen dem Ventilnadelbund und der Nadelmitnehmerhülse ein Ringspalt vorgesehen ist, der bei einer temperaturbedingten Längenänderung von Bauteilen des Brennstoffeinspritzventils ein Entweichen von Brennstoff aus dem Temperaturausgleichsraum ermöglicht. Auf diese Weise ist die zwischen dem Ventilnadelbund und der Nadelmitnehmerhülse vorgesehene Führungsfläche so ausgebildet, daß sie zugleich das Entlüften des Temperaturausgleichsraums ermöglicht. Ebenso ist es vorteilhaft, daß zwischen der Ventilnadel und dem Bund der Nadelmitnehmerhülse ein Ringspalt vorgesehen ist.

### Zeichnung

Ein Ausführungsbeispiel der Erfindung ist in der Zeichnung vereinfacht dargestellt und in der nachfolgenden Beschreibung näher erläutert. Es zeigen:
- Fig. 1: einen auszugsweisen axialen Schnitt durch ein Ausführungsbeispiel eines erfindungsgemäßen Brennstoffeinspritzventils; und
- Fig. 2: den in Fig. 1 mit II bezeichneten Ausschnitt in einer axialen Schnittdarstellung.

### Beschreibung des Ausführungsbeispiels

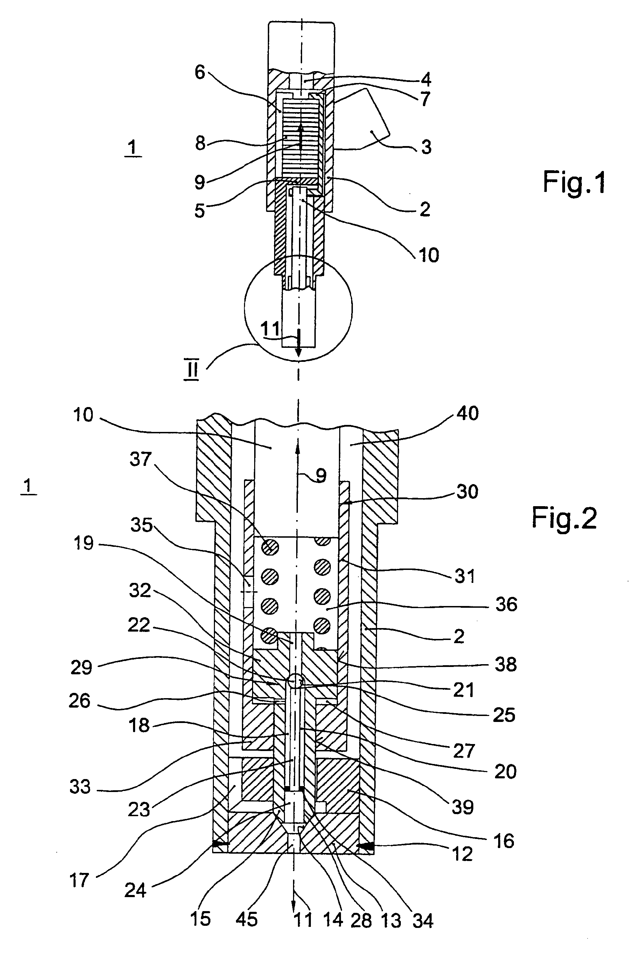

Fig. 1 zeigt in einer auszugsweisen axialen Schnittdarstellung ein erfindungsgemäßes Brennstoffeinspritzventil 1. Das Brennstoffeinspritzventil 1 dient insbesondere zum direkten Einspritzen von Brennstoff, insbesondere von Benzin, in einen Brennraum einer gemischverdichtenden, fremdgezündeten Brennkraftmaschine als sogenanntes Benzindirekteinspritzventil. In dem Ausführungsbeispiel ist das Brennstoffeinspritzventil 1 als innenöffnendes Brennstoffeinspritzventil 1 ausgeführt. Das erfindungsgemäße Brennstoffeinspritzventil 1 eignet sich jedoch auch für andere Anwendungsfälle.

Das Brennstoffeinspritzventil 1 weist ein Ventilgehäuse 2 auf, das einen elektrischen Anschluß 3 und einen Brennstoffeinlaß 4 umfaßt. Im Inneren des Ventilgehäuses 2 des Brennstoffeinspritzventils 1 befindet sich ein piezoelektrischer oder magnetostriktiver Aktor 8, der sich an einem mit dem Ventilgehäuse 2 verbundenem Stützelement 5 abstützt und von Bügelsegmenten 6, 7 umfaßt wird. Bei einer Betätigung des Aktors 8 dehnt sich dieser in Betätigungsrichtung 9 aus, wodurch sich die Bügelsegmente 6, 7 und ein mit den Bügelsegmenten 6, 7 verbundener Stößel 10 in Betätigungsrichtung 9 bewegen. Auf diese Weise erfolgt eine Hubumkehr, so daß sich der Stößel 10 bei einer Betätigung des Aktors 8 entgegen einer Abspritzrichtung 11 bewegt.

Fig. 2 zeigt den in Fig. 1 mit II bezeichneten Ausschnitt des Ausführungsbeispiels des Brennstoffeinspritzventils 1 in einer auszugsweisen, axialen Schnittdarstellung.

Das Ventilgehäuse 2 ist über eine umlaufende Schweißnaht 12 mit einem Ventilsitzkörper 13 verbunden. Der Ventilsitzkörper 13 weist eine Ventilsitzfläche 14 auf, die mit einem an einer Ventilnadel 15 ausgebildeten Ventilschließkörper 28 zu einem Dichtsitz zusammenwirkt. Die Ventilnadel 15 wird von einer Ventilnadelführung 16 geführt, die wenigstens eine Aussparung 17 zum Zuleiten von Brennstoff zu dem aus der Ventilnadel 15 und der Ventilsitzfläche 14 gebildeten Dichtsitz aufweist.

Die Ventilnadel 15 weist eine innere, längs verlaufende Aussparung 18 auf, die ein erstes Teilstück 19 und ein zweites Teilstück 20 umfaßt, wobei zwischen dem ersten Teilstück 19 und dem zweiten Teilstück 20 eine kegelförmige Dichtfläche 21 ausgebildet ist. Im zweiten Teilstück 20 der Aussparung 18 befindet sich eine Kugel 22, die an der Dichtfläche 21 der Aussparung 18 anliegt. Dabei ist der Durchmesser des ersten Teilstücks 19 kleiner als der Durchmesser der Kugel 22, so daß die Kugel 22 nicht in das Teilstück 19 gelangen kann, und der Durchmesser der Kugel 22 ist kleiner als der Durchmesser des zweiten Teilstücks 20, so daß die Kugel im zweiten Teilstück 20 beweglich ist. Die Bewegung der Kugel 22 wird von einem Einstellstift 23 begrenzt, der über ein Einstellelement 24 in der Aussparung 18 der Ventilnadel 15 befestigt ist. Das Einstellelement 24 ist in die Aussparung 18 der Ventilnadel 15 eingepaßt und gegenüber dem zweiten Teilstück 20 der Aussparung 18 mit einem Dichtring 34 abgedichtet zum Abdichten des zweiten Teilstücks 20 der Aussparung 18. Durch den Abstand zwischen der Dichtfläche 21 und einer oberen Stirnseite 25 des Einstellstifts 23 ist die Bewegung der Kugel 22 begrenzt, so daß sich durch den Einstellstift 23 eine maximale Öffnungsbewegung der Kugel 22 einstellen läßt. Die Ventilnadel 15 weist eine seitliche Bohrung 26 auf, die das zweite Teilstück 20 der Aussparung 18 mit einem Temperaturausgleichsraum 27 verbindet. Auf diese Weise ist durch die Kugel 22 und die Dichtfläche 21 ein Richtungsventil 29 gebildet, das bei einem Brennstoffstrom vom ersten Teilstück 19 der Aussparung 18 in das zweite Teilstück 20 der Aussparung 18 öffnet und bei einem umgekehrten Brennstoffstrom schließt.

Der Stößel 10 ist mittels einer umlaufenden Schweißnaht 30 mit einer Nadelmitnehmerhülse 31 verbunden, die einen Ventilnadelbund 32 der Ventilnadel 15 umgreift und mit einem Nadelmitnehmerbund 33 die Ventilnadel 15 abschnittsweise umschließt. Die Nadelmitnehmerhülse 31 schließt mit der Ventilnadel 15 den Temperaturausgleichsraum 27 ein, wobei das Volumen des Temperaturausgleichsraums 27 durch den Abstand zwischen dem Ventilnadelbund 32 und dem Nadelmitnehmerbund 33 variierbar ist.

Die Nadelmitnehmerhülse 31 weist eine seitliche Aussparung 35 auf, die in dem Ausführungsbeispiel als Bohrung ausgebildet ist. Durch die seitliche Aussparung 35, einen Innenraum 36 der Nadelmitnehmerhülse 31, die Aussparung 18 und die Bohrung 26 ist eine Brennstoffleitung gebildet, die den Brennstoffeinlaß 4 über das Richtungsventil mit dem Temperaturausgleichsraum 27 verbindet.

In dem Innenraum 36 der Nadelmitnehmerhülse 31 ist eine Schließfeder 37 vorgesehen, die über den Ventilnadelbund 32 der Ventilnadel 15 auf den Druck des Brennstoffes im Temperaturausgleichsraum 27 einwirkt. Die Schließfeder 37 stützt sich dabei einerseits an dem Stößel 10 und andererseits an dem Ventilnadelbund 32 der Ventilnadel 15 ab.

Zwischen dem Ventilnadelbund 32 der Ventilnadel 15 und der Nadelmitnehmerhülse 31 ist ein ersten Ringspalt 38 ausgebildet, durch den ein stark gedrosselter Brennstofffluß zwischen dem Innenraum 36 der Nadelmitnehmerhülse 31 und dem Temperaturausgleichsraum 27 erfolgt. Außerdem ist zwischen der Ventilnadel 15 und dem Nadelmitnehmerbund 33 der Nadelmitnehmerhülse 31 ein zweiter Ringspalt 39 vorgesehen, der einen stark gedrosselten Brennstofffluß zwischen dem Temperaturausgleichsraum 27 und einem Innenraum 40 des Brennstoffeinspritzventils 1 ermöglicht.

Im folgenden wird die Funktionsweise der erfindungsgemäßen Temperaturausgleichsvorrichtung näher erläutert. Dabei wird zunächst angenommen, daß das Brennstoffeinspritzventil 1 zumindest nicht vollständig mit Brennstoff gefüllt ist.

Bei Betrieb des Brennstoffeinspritzventils 1 wird Brennstoff über den Brennstoffeinlaß 4 unter hohem Druck in den Innenraum 40 des Brennstoffeinspritzventils 1 geleitet. Dadurch füllen sich der Innenraum 40 des Brennstoffeinspritzventils 1, die Aussparung 17 der Ventilnadelführung 16 und über die seitliche Aussparung 35 der Nadelmitnehmerhülse 31 der Innenraum 36 der Nadelmitnehmerhülse 31 mit Brennstoff. Aus dem Innenraum 36 der Nadelmitnehmerhülse 31 strömt Brennstoff in das erste Teilstück 19 der Aussparung 18, wodurch ein Überdruck gegenüber dem zweiten Teilstück 20 der Aussparung 18 erzeugt wird, so daß die Kugel 22 des Richtungsventils 29 von der Dichtfläche 21 abhebt und das zweite Teilstück 20, die Bohrung 26 und über die Bohrung 26 der Temperaturausgleichsraum 27 mit Brennstoff gefüllt werden.

Wird der Aktor 8 betätigt, dann bewegt sich der Stößel 10 in der Betätigungsrichtung 9, wodurch der Nadelmitnehmerbund 33 über den Brennstoff in dem vollständig gefüllten Temperaturausgleichsraum 27 auf den Ventilnadelbund 32 der Ventilnadel 15 einwirkt und diese von der Ventilsitzfläche 14 des Ventilsitzkörpers 13 abhebt, wodurch der Dichtsitz geöffnet wird. Über den entstandenen Spalt zwischen der Ventilnadel 15 und der Ventilsitzfläche 14 strömt Brennstoff aus dem Innenraum 40 des Brennstoffeinspritzventils 1 über die Aussparung 17 der Ventilnadelführung 16 in einen Abspritzkanal 45, wodurch Brennstoff aus dem Brennstoffeinspritzventil 1 abgespritzt wird. Dabei wird beim Bewegen des Nadelmitnehmerbunds 33 in der Betätigungsrichtung 9 in dem Temperaturausgleichsraum 27 ein Überdruck erzeugt, wodurch die Kugel 22 an den Dichtsitz 21 gepreßt wird und das Richtungsventil 29 geschlossen wird.

Beim Rückstellen des Stößels 10 wird der Nadelmitnehmerbund 33 der Nadelmitnehmerhülse 31 entgegen der Betätigungsrichtung 9 bewegt, wobei die Schließfeder 37 die Ventilnadel 15 in der Nadelmitnehmerhülse 31 mitführt, so daß das Volumen des Temperaturausgleichsraum 27 zumindest annähernd konstant bleibt.

Wird aufgrund einer Längenänderung von Teilen des Brennstoffeinspritzventils 1 ein Anliegen der Ventilnadel 15 an der Ventilsitzfläche 14 des Ventilsitzkörpers 13 bereits vor einer vollständigen Rückstellung des Nadelmitnehmerbundes 33 der Nadelmitnehmerhülse 31 erreicht, so wird bei der vollständigen Rückstellung des Nadelmitnehmerbundes 33 das Volumen des Temperaturausgleichsraum 27 vergrößert, so daß der Druck des Brennstoffs in dem Temperaturausgleichsraum 27 gegenüber dem Brennstoffdruck des vom Brennstoffeinlaß 4 zugeführten Brennstoffs verringert wird, wodurch das Richtungsventil 29 öffnet und Brennstoff in den Temperaturausgleichsraum 27 nachströmt.

Wird bei einer temperaturbedingten Längenänderung von Bauteilen des Brennstoffeinspritzventils 1 eine Rückstellung des Nadelmitnehmerbundes 33 der Nadelmitnehmerhülse 31 bereits vor dem vollständigen Schließen des aus der Ventilnadel 15 und der Ventilsitzfläche 14 des Ventilsitzkörpers 13 gebildeten Dichtsitzes erreicht, so wird aufgrund des Brennstoffdrucks des Brennstoffs im Innenraum 36 der Nadelmitnehmerhülse 31 und der Kraft der Schließfeder 37 Brennstoff aus dem Temperaturausgleichsraum 27 über die Ringspalte 38, 39 verdrängt, so daß ein vollständiges Schließen der Ventilnadel 15 erreicht wird.

Ist nach einer Betriebspause des Brennstoffeinspritzventils 1 der Temperaturausgleichsraum 27 nicht oder nur teilweise mit Brennstoff gefüllt, so wird dieser über das Richtungsventil 29 vollständig mit Brennstoff gefüllt, wobei sich eine Anpassung des Volumens des Temperaturausgleichsraums 27 an die Schließstellung des Brennstoffeinspritzventils 1 ergibt.

Da Temperaturänderungen im Vergleich zur Öffnungszeit des Ventils langsam stattfinden, werden temperaturbedingte Längenänderungen, insbesondere im geschlossenen Zustand des Brennstoffeinspritzventils 1, d. h. wenn der Ventilschließkörper 28 an der Ventilsitzfläche 14 anliegt, ausgeglichen.

Im Betrieb des Brennstoffeinspritzventils 1 bewirkt die Schließfeder 37 in der Offenstellung des Brennstoffeinspritzventils 1, d. h. wenn die Ventilnadel 15 von der Ventilsitzfläche 14 abhebt, eine geringfügige Verkleinerung des Temperaturausgleichsraums 27, da durch das Beaufschlagen der Ventilnadel 15 am Ventilnadelbund 32 Leckströme von Brennstoff aus dem Temperaturausgleichsraum 27 erzeugt werden. Im allgemeinen liegt der oben behandelte Fall vor, daß ein Anliegen der Ventilnadel 15 an der Ventilsitzfläche 14 des Ventilsitzkörpers 13 bereits vor einer vollständigen Rückstellung des Nadelmitnehmerbundes 33 der Nadelmitnehmerhülse 31 erreicht wird. Das Brennstoffeinspritzventil 1 schließt daher stets mit einer von der Schließfeder 37 abhängigen Überschußkraft.

Die Erfindung ist nicht auf das beschriebene Ausführungsbeispiel beschränkt. Insbesondere eignet sich die Erfindung auch für ein außenöffnendes Brennstoffeinspritzventil 1.

## Patentansprüche

1. Brennstoffeinspritzventil (1), insbesondere Einspritzventil für Brennstoffeinspritzanlagen von Brennkraftmaschinen, mit einem piezoelektrischen oder magnetostriktiven Aktor (8), einer von dem Aktor (8) mittels einer hydraulischen Temperaturausgleichsvorrichtung betätigbaren Ventilnadel (15) und einem von der Ventilnadel (15) betätigbaren Ventilschließkörper (28), der mit einer Ventilsitzfläche (14) zu einem Dichtsitz zusammenwirkt,
**dadurch gekennzeichnet,**
**daß** die Temperaturausgleichsvorrichtung eine Nadelmitnehmerhülse (31) umfaßt, welche einen Ventilnadelbund (32) der Ventilnadel (15) umgreift und mit einem Nadelmitnehmerbund (33) die Ventilnadel (15) abschnittsweise umschließt,
**daß** die Nadelmitnehmerhülse (31) mit der Ventilnadel (15) einen Temperaturausgleichsraum (27) einschließt, und
**daß** der Temperaturausgleichsraum (27) zum Befüllen des Temperaturausgleichsraums (27) mit Brennstoff über ein Richtungsventil (29) mit einem Brennstoffeinlaß (4) des Brennstoffeinspritzventils (1) verbunden ist.

2. Brennstoffeinspritzventil nach Anspruch 1,
**dadurch gekennzeichnet,**
**daß** das Richtungsventil (29) mit einem Innenraum (36) der Nadelmitnehmerhülse (31) verbunden ist.

3. Brennstoffeinspritzventil nach Anspruch 2,
**dadurch gekennzeichnet,**
**daß** die Nadelmitnehmerhülse (31) eine seitliche Aussparung (35) aufweist, die Teil einer den Brennstoffeinlaß (4) über das Richtungsventil (29) mit dem Temperaturausgleichsraum (27) verbindenen Brennstoffleitung ist.

4. Brennstoffeinspritzventil nach einem der Ansprüche 1 bis 3,
**dadurch gekennzeichnet,**
**daß** in einem Innenraum (36) der Nadelmitnehmerhülse (31) eine Schließfeder (37) vorgesehen ist, die über den Ventilnadelbund (32) der Ventilnadel (15) auf den Druck des Brennstoffes in dem Temperaturausgleichsraum (27) einwirkt.

5. Brennstoffeinspritzventil nach einem der Ansprüche 1 bis 4,
**dadurch gekennzeichnet,**
**daß** die Ventilnadel (15) eine Aussparung (18) aufweist und daß zur Bildung des Richtungsventils (29) in der Aussparung (18) eine Kugel (22) angeordnet ist, die mit einer konzentrischen, insbesondere kegelförmigen Dichtfläche (21) der Aussparung (18) zu einem Dichtsitz zusammenwirkt.

6. Brennstoffeinspritzventil nach Anspruch 5,
**dadurch gekennzeichnet,**
**daß** zum Einstellen einer maximalen Öffnungsbewegung der Kugel (22) des Richtungsventils (29) ein mit der Ventilnadel (15) verbundener Einstellstift (23) in der Aussparung (18) vorgesehen ist.

7. Brennstoffeinspritzventil nach Anspruch 5 oder 6,
**dadurch gekennzeichnet,**
**daß** die Aussparung (18) in der Ventilnadel (15) über eine seitliche Bohrung (26) in der Ventilnadel (15) mit dem Temperaturausgleichsraum (27) verbunden ist.

8. Brennstoffeinspritzventil nach einem der Ansprüche 1 bis 7,
**dadurch gekennzeichnet,**
**daß** zwischen dem Ventilnadelbund (32) und der Nadelmitnehmerhülse (31) ein Spalt, insbesondere ein ersten Ringspalt (38), vorgesehen ist, der bei einer temperaturbedingten Längenänderung von Bauteilen des Brennstoffeinspritzventils (1) ein Entweichen von Brennstoff aus dem Temperaturausgleichsraum (27) ermöglicht.

9. Brennstoffeinspritzventil nach einem der Ansprüche 1 bis 8,
**dadurch gekennzeichnet,**
**daß** zwischen der Ventilnadel (15) und dem Nadelmitnehmerbund (33) der Nadelmitnehmerhülse (31) ein Spalt, insbesondere ein zweiter Ringspalt (39), vorgesehen ist, der bei einer temperaturbedingten Längenänderung von Bauteilen des Brennstoffeinspritzventils (1) ein Entweichen von Brennstoff aus dem Temperaturausgleichsraum (27) ermöglicht.

## Claims

1. Fuel injection valve (1), in particular injection valve for fuel injection systems of internal combustion engines, with a piezoelectric or magnetostrictive actuator (8), with a valve needle (15) actuable by the actuator (8) by means of a hydraulic temperature compensation device and with a valve-closing body (28) which is actuable by the valve needle (15) and which co-operates with a valve-seat surface (14) to form a sealing seat, **characterized in that** the temperature compensation device comprises a needle driver sleeve (31) which engages around a valve-needle collar (32) of the valve needle (15) and which with a needle driver collar (33) partially surrounds the valve needle (15), **in that** the needle driver sleeve (31) encloses with the valve needle (15) a temperature compensation space (27), and **in that**, to fill the temperature compensation space (27) with fuel, the temperature compensation space (27) is connected to a fuel inlet (4) of the fuel injection valve (1) via a directional valve (29).

2. Fuel injection valve according to Claim 1, **characterized in that** the directional valve (29) is connected to an inner space (36) of the needle driver sleeve (31).

3. Fuel injection valve according to Claim 2, **characterized in that** the needle driver sleeve (31) has a lateral clearance (35) which is part of a fuel line connecting the fuel inlet (4) to the temperature compensation space (27) via the directional valve (29).

4. Fuel injection valve according to one of Claims 1 to 3, **characterized in that**, in an inner space (36) of the needle driver sleeve (31), a closing spring (37) is provided, which acts via the valve-needle collar (32) of the valve needle (15) on the pressure of the fuel in the temperature compensation space (27).

5. Fuel injection valve according to one of Claims 1 to 4, **characterized in that** the valve needle (15) has a clearance (18), and **in that**, to form the directional valve (29), the clearance (18) has arranged in it a ball (22) which cooperates with a concentric, in particular conical, sealing surface (21) of the clearance (18) to form a sealing seat.

6. Fuel injection valve according to Claim 5, **characterized in that** a setting pin (23) connected to the valve needle (15) is provided in the clearance (18) in order to set a maximum opening movement of the ball (22) of the directional valve (29).

7. Fuel injection valve according to Claim 5 or 6, **characterized in that** the clearance (18) in the valve needle (15) is connected to the temperature compensation space (27) via a lateral bore (26) in the valve needle (15).

8. Fuel injection valve according to one of Claims 1 to 7, **characterized in that**, between the valve-needle collar (32) and the needle driver sleeve (31), a gap, in particular a first annular gap (38), is provided, which, in the event of a temperature-induced length change of components of the fuel injection valve (1), allows an escape of fuel out of the temperature compensation space (27).

9. Fuel injection valve according to one of Claims 1 to 8, **characterized in that**, between the valve needle (15) and the needle driver collar (33) of the needle driver sleeve (31), a gap, in particular a second annular gap (39), is provided, which, in the event of a temperature-induced length change of components of the fuel injection valve (1), allows an escape of fuel out of the temperature compensation space (27).

## Revendications

1. Injecteur de carburant (1), en particulier injecteur pour des dispositifs d'injection de carburant de moteurs à combustion interne, comportant un actionneur piézoélectrique ou magnétostrictif (8), une aiguille de soupape (15) actionnée par l'actionneur (8) au moyen d'un dispositif de compensation hydraulique de la température et un corps de fermeture de soupape (28) actionné par l'aiguille de soupape (15), et coopérant avec une surface de siège de soupape (14) pour former un siège d'étanchéité,
**caractérisé en ce que**
le dispositif de compensation de la température comporte une douille d'entraînement d'aiguille (31) qui enserre une collerette (32) de l'aiguille de soupape (15) et entoure partiellement l'aiguille de soupape (15) d'une collerette d'entrainement d'aiguille (33),
la douille d'entraînement d'aiguille (31), avec l'aiguille de soupape (15), intègre une chambre de compensation de la température (27) et la chambre de compensation de la température (27), pour se remplir de carburant, est reliée à une admission de carburant (4) de l'injecteur de carburant (1) par l'intermédiaire d'une soupape directionnelle (29).

2. Injecteur de carburant selon la revendication 1,
**caractérisé en ce que**
la soupape directionnelle (29) est reliée à un espace intérieur (36) de la douille d'entraînement d'aiguille (31).

3. Injecteur de carburant selon la revendication 2,
**caractérisé en ce que**
la douille d'entraînement d'aiguille (31) présente un évidement latéral (35) qui fait partie d'une conduite de carburant reliant l'admission de carburant (4) à la chambre de compensation de la température (27) par l'intermédiaire de la soupape directionnelle (29).

4. Injecteur de carburant selon l'une des revendications 1 à 3,
**caractérisé en ce qu'**
dans un espace intérieur (36) de la douille d'entraînement d'aiguille (31), un ressort de fermeture (37) agit sur la pression du carburant dans la chambre de compensation de la température (27) par l'intermédiaire de la collerette (32) de l'aiguille de soupape (15).

5. Injecteur de carburant selon l'une des revendications 1 à 4,
**caractérisé en ce que**
l'aiguille de soupape (15) présente un évidement (18) et, pour former la soupape directionnelle (29), il y a, dans l'évidement (18), une bille qui interagit avec une surface d'étanchéité (21) concentrique, en particulier conique, de l'évidement (18) pour former un siège d'étanchéité.

6. Injecteur de carburant selon la revendication 5,
**caractérisé en ce qu'**
une tige de réglage (23), reliée à l'aiguille de soupape (15) dans l'évidement (18), règle un mouvement d'ouverture maximale de la bille (22) de la soupape directionnelle (29).

7. Injecteur de carburant selon la revendication 5 ou 6,
**caractérisé en ce que**
l'évidement (18) dans l'aiguille de soupape (15) est relié à la chambre de compensation de la température (27) par l'intermédiaire d'un perçage latéral (26) dans l'aiguille de soupape (15).

8. Injecteur de carburant selon l'une des revendications 1 à 7,
**caractérisé en ce qu'**
entre la collerette (32) de l'aiguille de soupape et la douille d'entraînement d'aiguille (31), une fente, en particulier une première fente annulaire (38) permet au carburant de s'échapper de la chambre de compensation de la température (27) dans le cas d'une modification de la longueur des pièces de l'injecteur de carburant (1) liée à la température.

9. Injecteur de carburant selon l'une des revendications 1 à 8,
**caractérisé en ce qu'**
entre l'aiguille de soupape (15) et la collerette d'entraînement d'aiguille (33) de la douille d'entraînement d'aiguille (31), une fente, en particulier une deuxième fente annulaire (39) permet au carburant de s'échapper de la chambre de compensation de la température (27) dans le cas d'une modification de la longueur des pièces de l'injecteur de carburant (1) liée à la température.
